# EUROPEAN PATENT APPLICATION

(11) **EP 4 761 052 A1**
(43) Date of publication of application: **17.06.2026**
(21) Application number: 25222978.6
(22) Date of filing: 12.12.2025
(51) Int. Cl.: H02J 7/46, H02J 7/50, H02J 3/32

(54) **ENERGY STORAGE SYSTEM AND CONTROL METHOD THEREOF, AND POWER CONSUMPTION SYSTEM**

(30) Priority: 12.12.2024 CN 202411846037
(71) Applicant: Shenzhen Hithium Energy Storage Technology Co., Ltd., Shenzhen, Guangdong 518000 (CN); Xiamen Hithium Energy Storage Technology Co., Ltd., Xiamen, Fujian 361100 (CN)
(72) Inventor: WANG, Wen, Guangdong, 518000 (CN); WANG, Zhe, Guangdong, 518000 (CN)
(74) Representative: RGTH

(57) **Abstract**

The present disclosure provides an energy storage system, a control method thereof, and a power consumption system. The energy storage system includes a first energy storage sub-system (210), a second energy storage sub-system (220), and a power conversion system (120). The first energy storage sub-system is provided with a first battery system (211) and a first battery management system (212); the second energy storage sub-system (220) is provided with a second battery system and a second battery management system (223), and the second battery system includes a first battery sub-cluster (221) and a second battery sub-cluster (222). The power conversion system (120) is electrically connected to the first battery system and the first battery sub-cluster or the second battery sub-cluster, and the power conversion system is communicatively connected to the first battery management system; the first battery management system performs coordinated charge and discharge control on the first battery sub-cluster.

## Description

### TECHNICAL FIELD

The present disclosure relates to the field of energy storage technology, and in particular to an energy storage system, a control method for the energy storage system, and a power consumption system.

### BACKGROUND

An energy storage system includes a battery pack, an energy management system (EMS), a battery management system (BMS), a power conversion system (PCS), and other electrical device. During operation of the energy storage system, the BMS collects performance parameters of the battery pack and shares them with the EMS and PCS. The EMS then sends control instructions to the PCS and BMS based on optimization and scheduling strategies, and controls battery charging and discharging, etc.

In the related art, energy storage products employ modular designs, enabling flexible combinations of containerized energy storage units to achieve varying capacity requirements.

### SUMMARY

The present disclosure provides an energy storage system, a control method therefor, and a power consumption system, which at least partially overcome the issue of poor unit-PCS compatibility in energy storage systems provided by the related art.

Other features and advantages of the present disclosure will become apparent from the following detailed description, or will be acquired in part through practice of the present disclosure.

According to an aspect of the present disclosure, there is provided an energy storage system, including: a first energy storage sub-system, including a first battery system and a first battery management system, and the first battery management system being electrically connected to the first battery system; a second energy storage sub-system, including a second battery system and a second battery management system, the second battery system including a first battery sub-cluster and a second battery sub-cluster, the second battery management system being electrically connected to the first battery sub-cluster and the second battery sub-cluster, and the second battery management system being communicatively connected to the first battery management system; a power conversion system, electrically connected to the first battery system and the first battery sub-cluster or the second battery sub-cluster, and communicatively connected to the first battery management system; where the first battery management system performs coordinated charge and discharge control on the first battery sub-cluster.

In an embodiment of the present disclosure, the power conversion system includes a first power conversion system and a second power conversion system; where the first power conversion system is electrically connected to the first battery system and the first battery sub-cluster, and the first power conversion system is communicatively connected to the first battery management system; the energy storage system further includes a third energy storage sub-system, the third energy storage sub-system includes a third battery system and a third battery management system; the second power conversion system is electrically connected to the third battery system and the second battery sub-cluster, and the third battery management system is communicatively connected to the second battery management system; where the first battery management system performs coordinated charge and discharge control on the first battery sub-cluster; and/or the third battery management system performs coordinated charge and discharge control on the second battery sub-cluster.

In an embodiment of the present disclosure, the first battery management system is configured to send a first coordinated control request instruction to the second battery management system in a case where the first battery management system is fault-free and in a standby state; the second battery management system is configured to receive the first coordinated control request instruction and send battery information of the first battery sub-cluster to the first battery management system in a case where the second battery management system is fault-free and in a standby state; the first battery management system is further configured to process collected battery information of the first battery system and received battery information of the first battery sub-cluster, obtain standby state and charge and discharge data of the first and second battery management systems, and send the standby state and charge and discharge data of the first and second battery management systems to the first power conversion system; the first power conversion system is configured to configure charge and discharge parameters based on the standby state and charge and discharge data of the first and second battery management systems, and send the charge and discharge parameters to the first battery management system, so that the first battery management system performs coordinated charge and discharge control on the first battery sub-cluster according to the charge and discharge parameters.

In an embodiment of the present disclosure, the third battery management system is configured to send a second coordinated control request instruction to the second battery management system in a case where the third battery management system is fault-free and in a standby state; the second battery management system is configured to receive the second coordinated control request instruction and send battery information of the second battery sub-cluster to the third battery management system in a case where the second battery management system is fault-free and in a standby state; the third battery management system is further configured to process collected battery information of the third battery system and received battery information of the second battery sub-cluster, obtain standby state and charge and discharge data of the third battery management system and the second battery management system, and send the standby state and charge and discharge data of the third battery management system and the second battery management system to the second power conversion system; the second power conversion system is configured to configure charge and discharge parameters based on the standby state and charge and discharge data of the third battery management system and the second battery management system, obtain the charge and discharge parameters, and send the charge and discharge parameters to the third battery management system, so that the third battery management system performs coordinated charge and discharge control on the second battery sub-cluster based on the charge and discharge parameters.

In an embodiment of the present disclosure, the first battery sub-cluster and the second battery sub-cluster are electrically connected to the power conversion system via a switch element, where the switch element is configured to selectively electrically connect the first battery sub-cluster and the second battery sub-cluster to the power conversion system, so that the first battery management system performs time-division coordinated charge and discharge control on the first battery sub-cluster and the second battery sub-cluster.

In an embodiment of the present disclosure, the first battery management system is configured to send a third coordinated control request instruction to the second battery management system in a case where the first battery management system is fault-free and in a standby state; the second battery management system is configured to, in a case where the second battery management system is fault-free and in a standby state, receive the third coordinated control request instruction, control the switch element to electrically connect a target battery sub-cluster to the power conversion system, and send battery information of the target battery sub-cluster to the first battery management system, where the target battery sub-cluster is the first battery sub-cluster or the second battery sub-cluster; the first battery management system is further configured to process collected battery information of the first battery system and received battery information of the target battery sub-cluster, obtain standby state and charge and discharge data of the first and second battery management systems, and send the standby state and charge and discharge data of the first and second battery management systems to the power conversion system; the power conversion system is configured to configure charge and discharge parameters based on the standby state and charge and discharge data of the first and second battery management systems, and send the charge and discharge parameters to the first battery management system, so that the first battery management system performs coordinated charge and discharge control on the target battery sub-cluster based on the charge and discharge parameters.

In an embodiment of the present disclosure, the energy storage system further includes an energy management system, where the energy management system is communicatively connected to the first battery management system, the second battery management system, and the third battery management system.

According to another aspect of the present disclosure, there is provided a method for controlling an energy storage system, utilizing the energy storage system according to the above embodiments, the method including performing coordinated charge and discharge control on the first battery sub-cluster by the first battery management system.

In an embodiment of the present disclosure, the power conversion system includes a first power conversion system and a second power conversion system; where the first power conversion system is electrically connected to the first battery system and the first battery sub-cluster, and the first power conversion system is communicatively connected to the first battery management system; the energy storage system further includes a third energy storage sub-system, the third energy storage sub-system includes a third battery system and a third battery management system; the second power conversion system is electrically connected to the third battery system and the second battery sub-cluster, and the third battery management system is communicatively connected to the second battery management system; where the method further includes performing coordinated charge and discharge control on the first battery sub-cluster by the first battery management system; and performing coordinated charge and discharge control on the second battery sub-cluster by the third battery management system.

In an embodiment of the present disclosure, performing the coordinated charge and discharge control on the first battery sub-cluster by the first battery management system includes in a case where the first battery management system is fault-free and in a standby state, the first battery management system sending a first coordinated control request instruction to the second battery management system; in a case where the second battery management system is fault-free and in a standby state, the second battery management system receiving the first coordinated control request instruction and sending battery information of the first battery sub-cluster to the first battery management system; the first battery management system processing collected battery information of the first battery system and received battery information of the first battery sub-cluster, obtaining standby state and charge and discharge data of the first and second battery management systems, and sending the standby state and charge and discharge data of the first and second battery management systems to the first power conversion system; the first power conversion system configuring charge and discharge parameters based on the standby state and charge and discharge data of the first and second battery management systems, and sending values of the charge and discharge parameters to the first battery management system; the first battery management system performing the coordinated charge and discharge control on the first battery sub-cluster based on the charge and discharge parameters.

In an embodiment of the present disclosure, performing the coordinated charge and discharge control on the second battery sub-cluster by the third battery management system includes in a case where the third battery management system is fault-free and in a standby state, the third battery management system sending a second coordinated control request instruction to the second battery management system; in a case where the second battery management system is fault-free and in a standby state, the second battery management system receiving the second coordinated control request instruction and sending battery information of the second battery sub-cluster to the third battery management system; the third battery management system processing collected battery information of the third battery system and received battery information of the second battery sub-cluster, obtaining standby state and charge and discharge data of the third battery management system and the second battery management system, and sending the standby state and charge and discharge data of the third battery management system and the second battery management system to the second power conversion system; the second power conversion system configuring charge and discharge parameters based on the standby state and charge and discharge data of the third battery management system and the second battery management system, and sending the charge and discharge parameters to the third battery management system; and the third battery management system performing the coordinated charge and discharge control on the second battery sub-cluster based on the charge and discharge parameters.

In an embodiment of the present disclosure, the first battery sub-cluster and the second battery sub-cluster are electrically connected to the power conversion system via a switch element, where the switch element is configured to selectively electrically connect the first battery sub-cluster and the second battery sub-cluster to the power conversion system, so that the first battery management system performs time-division coordinated charge and discharge control on the first battery sub-cluster and the second battery sub-cluster; where performing the coordinated charge and discharge control on the first battery sub-cluster by the first battery management system includes in a case where the first battery management system is fault-free and in a standby state, the first battery management system sending a third coordinated control request instruction to the second battery management system; in a case where the second battery management system is fault-free and in a standby state, the second battery management system receiving the third coordinated control request instruction, controlling the switch element to electrically connect a target battery sub-cluster to the power conversion system, and sending battery information of the target battery sub-cluster to the first battery management system, where the target battery sub-cluster is the first battery sub-cluster or the second battery sub-cluster; the first battery management system processing collected battery information of the first battery system and received battery information of the target battery sub-cluster, obtaining standby state and charge and discharge data of the first and second battery management systems, and sending the standby state and charge and discharge data of the first and second battery management systems to the power conversion system; the power conversion system configuring charge and discharge parameters based on the standby state and charge and discharge data of the first and second battery management systems, and sending the charge and discharge parameters to the first battery management system; and the first battery management system performing the coordinated charge and discharge control on the target battery sub-cluster based on the charge and discharge parameters.

According to another aspect of the present disclosure, there is provided a power consumption system, including: the energy storage system mentioned above, electrically connected to a power grid.

In the embodiments of the present disclosure, the energy storage system includes a first energy storage sub-system, a second energy storage sub-system, and a power conversion system. The first energy storage sub-system includes a first battery system and a first battery management system, and the first battery management system is electrically connected to the first battery system. The second energy storage sub-system includes a second battery system and a second battery management system. The second battery system includes a first battery sub-cluster and a second battery sub-cluster. The second battery management system is electrically connected to the first battery sub-cluster and the second battery sub-cluster, and the second battery management system is communicatively connected to the first battery management system. The power conversion system is electrically connected to the first battery system and the first battery sub-cluster or the second battery sub-cluster. The power conversion system is communicatively connected to the first battery management system. The first battery management system performs coordinated charge and discharge control on the first battery sub-cluster. On one hand, by segmenting and controlling the battery clusters within the second energy storage sub-system, the first battery management system performs coordinated charge and discharge control on the battery sub-clusters within the second energy storage sub-system. This reduces the number of power conversion systems without altering the original control architecture of the energy storage subsystem. It enables the energy storage sub-system to meet the requirements for high-power PCS products, enhances compatibility between the energy storage sub-system and PCS, broadens adaptability, and satisfies expansion needs. On the other hand, adopting a unified control system enables centralized management and maintenance of the entire energy storage system, simplifying maintenance work and improving the system's reliability and stability.

It should be understood that the above general description and subsequent detailed descriptions are merely illustrative and explanatory, and do not limit the scope of this disclosure.

### BRIEF DESCRIPTION OF THE DRAWINGS

The accompanying drawings herein are incorporated into and constitute a part of this specification. They illustrate embodiments consistent with the present disclosure and, together with the specification, serve to explain the principles of the present disclosure. It should be understood that the drawings described below represent only some embodiments of the present disclosure. Those skilled in the art can, without inventive effort, derive other drawings from these drawings.
FIG. 1 illustrates an example structural diagram of an energy storage system provided in an embodiment of the present disclosure.
FIG. 2 illustrates a structural diagram of an energy storage system provided in an embodiment of the present disclosure.
FIG. 3 illustrates a communication connection diagram of an energy storage system provided in an embodiment of the present disclosure.
FIG. 4 illustrates a structural diagram of another energy storage system provided in an embodiment of the present disclosure.
FIG. 5 illustrates a communication connection diagram of another energy storage system provided in an embodiment of the present disclosure.
FIG. 6 illustrates a structural diagram of yet another energy storage system provided in an embodiment of the present disclosure.
FIG. 7 illustrates a structural diagram of a battery management system within an energy storage sub-system provided in an embodiment of the present disclosure.
FIG. 8 illustrates a structural diagram of a power consumption system provided in an embodiment of the present disclosure.
FIG. 9 illustrates a flow chart of a control method for an energy storage system provided in an embodiment of the present disclosure.
FIG. 10 illustrates a flow chart of a control method for another energy storage system provided in an embodiment of the present disclosure.
FIG. 11 illustrates a flow chart of a control method for yet another energy storage system provided in an embodiment of the present disclosure.
FIG. 12 illustrates a flow chart of a control method for still yet another energy storage system provided in an embodiment of the present disclosure.
FIG. 13 illustrates a flow chart of a first battery management system providing coordinated charge and discharge control of a first battery sub-cluster or a second battery sub-cluster provided in an embodiment of the present disclosure.
FIG. 14 illustrates an example flow chart of a control method for an energy storage system provided in an embodiment of the present disclosure.

The reference numerals are as follows:
100, energy storage system; 110, energy storage sub-system; 111, battery system; 112, battery management system; 120, power conversion system; 130, energy management system; 210, first energy storage sub-system; 211, first battery system; 212, first battery management system; 220, second energy storage sub-system; 221, first battery sub-cluster; 222, second battery sub-cluster; 223, second battery management system; 231, first power conversion system; 232, second power conversion system; 240, switch; 250, third energy storage sub-system; 251, third battery system; 252, third battery management system; 260, switch element; 311, battery cluster; 312, battery module; 313, module battery management unit; 314, cluster battery management unit; 315, system battery management unit; 400, power consumption system; 410, power grid; 420, power grid transformer.

### DETAILED DESCRIPTION

Example embodiments will now be described more fully with reference to the accompanying drawings. However, the example embodiments can be implemented in many forms and should not be construed as limited to the examples set forth herein; rather, these embodiments are provided so that the present disclosure will be thorough and complete and will fully convey the concepts of the example embodiments to those skilled in the art. The described features, structures, or characteristics may be combined in any suitable manner in one or more embodiments.

The drawings are merely schematic illustrations of the present disclosure and are not necessarily drawn to scale. Like reference numerals in the figures represent like or similar parts, and repeated descriptions thereof will be omitted. Some blocks shown in the drawings are functional entities that do not necessarily correspond to physically or logically separate entities. These functional entities may be implemented in software, in one or more hardware modules or integrated circuits, or in different networks and/or processor devices and/or microcontroller devices.

Because the energy needed by humans is highly temporal and spatially dependent, in order to rationally utilize and improve energy efficiency, it is necessary to store one form of energy in the same form or convert it into another form through a medium or device, and then release it in a specific form based on future application needs. Currently, the primary method for generating green electricity is to develop green energy sources such as photovoltaics and wind power to replace fossil fuels.

Currently, green electricity generation generally relies on photovoltaics, wind power, and hydropower. However, wind and solar power are often intermittent and highly volatile, leading to grid instability, insufficient power during peak hours, and excessive power during off-peak hours. Unstable voltage can also damage power supply. Consequently, insufficient demand or insufficient grid capacity can lead to "wind and solar curtailment". Addressing these issues requires energy storage. This involves converting electrical energy into other forms of energy through physical or chemical means and storing them. This energy is then converted back into electricity when needed. Simply put, energy storage is like a large "power bank," storing electricity when photovoltaic and wind power are plentiful and releasing the stored power when needed.

Taking electrochemical energy storage as an example, the present disclosure provides an energy storage device. A group of chemical batteries are provided in the energy storage device. The chemical elements in the battery are mainly used as energy storage media. The charging and discharging process is accompanied by chemical reactions or changes in the energy storage media. In simple terms, the electricity generated by wind and solar energy is stored in the chemical battery. When the use of external electricity reaches its peak, the stored electricity is released for use, or transferred to places where electricity is in short supply for use.

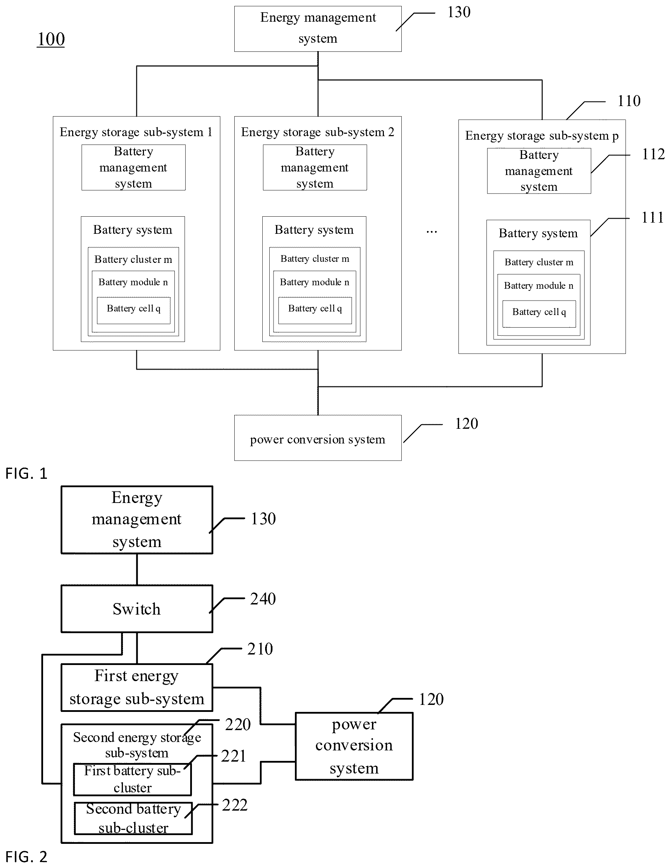

Current energy storage (i.e., storage of energy) has a wide range of application scenarios, including energy storage on the power generation side, energy storage on the grid side, and energy storage on the power consumption side. The corresponding types of energy storage devices include:
(1) Large energy storage power stations used on the side of wind power and photovoltaic power stations, which can assist renewable energy generation to meet power grid requirements and improve the utilization rate of renewable energy; energy storage stations serve as high-quality active/reactive power regulated sources on the power supply side, realizing load matching of electricity in time and space, enhancing the ability to absorb renewable energy, reducing instantaneous power changes, reducing the impact on the power grid, and improving renewable power absorption. These facilities also play a crucial role in grid reserve capacity, alleviating peak load supply pressures, and supporting peak shaving and frequency regulation.
(2) Energy storage container used on the power grid side has the functions of peak shaving, frequency regulation, and grid congestion relief. In terms of peak shaving, it can realize peak shaving and valley filling for power load, that is, charging the energy storage battery during the valley load period and releasing the stored electricity during the peak load period, thereby achieving a balance between power production and consumption.
(3) Small energy storage cabinet used on the power consumption side has the functions of self-generation and self-use of electricity, peak-valley price arbitrage, capacity cost management and improving power supply reliability. According to different application scenarios, energy storage on the power consumption side can be divided into industrial and commercial energy storage cabinets, household energy storage devices, energy storage charging piles, etc., which are generally used in conjunction with distributed photovoltaics. Industrial and commercial users can use energy storage for valley-peak price arbitrage and capacity cost management. In the power market that implements peak-valley electricity prices, by charging the energy storage system when the electricity price is low and discharging the energy storage system when the electricity price is high, peak-valley electricity price arbitrage can be achieved to reduce electricity costs. Furthermore, industrial enterprises subject to a two-part electricity price system can utilize energy storage systems to store energy during off-peak periods and discharge it during peak load periods, thereby reducing peak power consumption and reported maximum demand, and lowering capacity charges. Household photovoltaic energy storage device can increase level of self-generation and self-consumption. High electricity prices and poor power supply stability have driven demand for household photovoltaic installations. Given that photovoltaic power generation occurs during the day, while user loads are generally higher at night, energy storage can better utilize photovoltaic power, increasing level of self-generation and self-consumption and reducing electricity costs. Furthermore, energy storage is required for backup power in fields such as communication base stations and data centers.As shown in FIG. 1, the energy storage system 100 includes at least one energy storage sub-system 110. Each energy storage sub-system 110 includes a battery system 111 and a battery management system (BMS) 112. The battery system 111 includes multiple battery clusters. Each battery cluster includes multiple battery modules connected in series and parallel, and each battery module includes multiple battery cells connected in series and parallel. In FIG. 1, the energy storage system 100 includes p energy storage sub-systems 110, which can be containerized energy storage units. The battery system of each energy storage sub-system 110 includes m battery clusters, each battery cluster includes n battery modules, and each battery module includes q battery cells. It should be noted that p, m, n, and q can be determined based on actual needs.

The energy storage system 100 further includes an energy management system (EMS) 130 and a power conversion system (PCS) 120.

The energy management system 130 monitors performance parameters of the battery system, such as performance parameters of the battery modules, and stores these parameters to a server, such as a cloud server. The battery management system 111 is configured to collect performance parameters of the battery system; and the power conversion system 120 enables energy conversion and bidirectional flow between the battery clusters within the energy storage sub-system 110 and the power grid.

In addition, the energy storage system 100 further includes other auxiliary energy storage devices not shown in the accompanying figures. These devices may include liquid-cooled integrated cabinets, firefighting equipment, air conditioners, and master control meters.

In the related art, energy storage products employ modular designs, enabling flexible combinations of containerized energy storage units to achieve varying capacity requirements. For example, typical 5MWh large-capacity containerized energy storage units can be combined and used in parallel according to specific user requirements to accommodate varying power and capacity requirements. The modular containerized energy storage units enable flexible on-site deployment and rapid installation, significantly shortening the construction cycle and increasing the flexibility of the energy storage system.

The energy storage system 100 is also highly scalable. Customers can select a smaller energy storage system capacity for initial deployment and, later in operation, can add containerized energy storage units to upgrade capacity based on actual needs. This effectively reduces initial investment of customers, preserves future expansion potential, and enhances the overall competitiveness of the energy storage system 100.

However, despite the advantages of modular design and scalability, the energy storage system 100 faces several significant challenges in practical applications, as each containerized energy storage unit is controlled by an independent battery management system (BMS):
1. The power of the power conversion system 120 does not match the capacity of the containerized energy storage unit. For example, a customer's PCS power is 3.75MW, while the standard containerized energy storage unit has a capacity of 5MWh. If the customer requires a 15MWh system, using multiple standard containerized energy storage units may result in a mismatch between the power of the power conversion system 120 and the capacity of the containerized energy storage unit, impacting the efficiency of the energy storage system.
2. The non-standard product design leads to resource waste. When customer requirements do not match the capacity of a standard containerized energy storage unit, the problem can be resolved by redesigning or adjusting the containerized energy storage unit. However, this solution increases costs and may also result in resource waste. The design of the non-standard containerized energy storage unit also increases project execution complexity, reducing production efficiency and product consistency.

In order to solve at least some of the above technical problems, the present disclosure provides an energy storage system 100 using a battery management system for collaborative control. The energy storage system 100 includes a first energy storage sub-system 210, a second energy storage sub-system 220 and a power conversion system 120. The first energy storage sub-system 210 is provided with a first battery system 211 and a first battery management system 212, and the first battery management system 212 is electrically connected to the first battery system 211. The second energy storage sub-system 220 is provided with a second battery system and a second battery management system 223, and the second battery system includes a first battery sub-cluster 221 and a second battery sub-cluster 222, and the second battery management system 223 is electrically connected to the first battery sub-cluster 221 and the second battery sub-cluster 222, and the second battery management system 223 is communicatively connected to the first battery management system 212. The power conversion system 120 is electrically connected to the first battery system 211, and the first battery sub-cluster 221 or the second battery sub-cluster 222, and the power conversion system 120 is communicatively connected to the first battery management system 212. The first battery management system 212 performs coordinated charge and discharge control on the first battery sub-cluster 221. On one hand, by segmenting and controlling the second battery system within the second energy storage sub-system 220, the first battery management system 212 performs coordinated charge and discharge control on the battery sub-clusters within the second energy storage sub-system 220. This reduces the number of power conversion systems 120 without changing the existing control architecture of the energy storage sub-system, enabling the energy storage sub-system to meet the requirements of power conversion systems 120 with high power. This improves compatibility between the energy storage sub-system and the power conversion system 120, increases adaptability, and meets expansion needs. On the other hand, the use of a unified control system enables centralized management and maintenance of the entire energy storage system 100, simplifying maintenance work and improving the reliability and stability of the energy storage system.

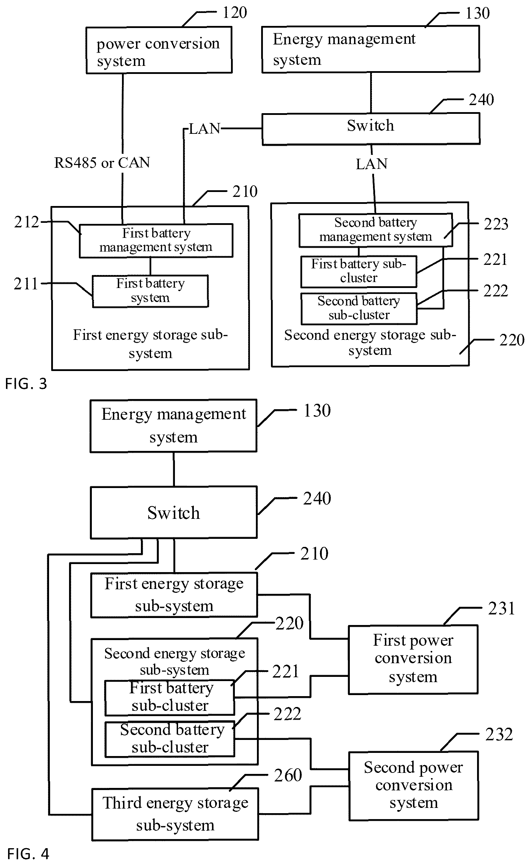

FIG. 2 shows a schematic structural diagram of an energy storage system 100 provided in an embodiment of the present disclosure. FIG. 3 shows a schematic diagram of communication connections of an energy storage system 100 provided in an embodiment of the present disclosure. As shown in FIG. 2 and FIG. 3, in one embodiment, the energy storage system 100 provided by the present disclosure includes a first energy storage sub-system 210, a second energy storage sub-system 220, and a power conversion system 120. The first energy storage sub-system 210 includes a first battery system 211 and a first battery management system 212, and the first battery management system 212 is electrically connected to the first battery system 211. The second energy storage sub-system 220 includes a second battery system and a second battery management system 223, and the second battery system includes a first battery sub-cluster 221 and a second battery sub-cluster 222. The second battery management system 223 is electrically connected to the first battery sub-cluster 221 and the second battery sub-cluster 222, and the second battery management system 223 is communicatively connected to the first battery management system 212. The power conversion system 120 is electrically connected to the first battery system 211 and the first battery sub-cluster 221 or the second battery sub-cluster 222, and the power conversion system 120 is communicatively connected to the first battery management system 212. The first battery management system 212 performs coordinated charge and discharge control on the first battery sub-cluster 221.

It should be noted that the first battery management system 212 can perform coordinated charge and discharge control on the battery sub-clusters electrically connected to the power conversion system 120.

The energy storage system 100 may include one or more power conversion systems 120, each of which can be connected to multiple energy storage sub-systems. For one power conversion system 120, the first energy storage sub-system 210 can be the energy storage sub-system installed during initial installation of the power conversion system 120, or the energy storage sub-system used within the power conversion system 120, while the second energy storage sub-system 220 can be a new energy storage sub-system added during expansion of the power conversion system 120.

It should be noted that each of the first battery system 211 and the second battery system includes a battery cluster 311 formed by multiple battery modules 312 connected in series or parallel. A battery module 312 can include multiple battery cells connected in series or parallel. To distinguish the battery systems within first energy storage sub-system 210 and second energy storage sub-system 220, the battery system within first energy storage sub-system 210 is defined as first battery system 211, and the battery system within second energy storage sub-system 220 is defined as second battery system. The second battery system includes first battery sub-cluster 221 and second battery sub-cluster 222. It should be noted that the number of battery cells in first battery sub-cluster 221 and second battery sub-cluster 222 can be the same or different, that is, the capacity of first battery sub-cluster 221 and second battery sub-cluster 222 can be the same or different, and this is not specifically limited in this disclosure.

Each energy storage sub-system is equipped with a battery management system (BMS). This BMS primarily includes a detection module, a control module, a communication module, etc. Its primary function is to monitor and control the battery's state in real time, including but not limited to parameters such as voltage, current, temperature, state of charge (SOC), state of health (SOH), etc. The BMS also provides battery protection, such as overcharge, over-discharge, and overcurrent protection, to ensure battery safety and longevity.

In one embodiment, the battery management system within the first energy storage sub-system 210 is defined as a first battery management system 212. The first battery management system 212 is electrically connected to the first battery system 211 and is responsible for independently controlling the first battery system 211. The first battery management system 212 monitors and manages key parameters within the first energy storage sub-system 210, such as the charge and discharge state, temperature, health state, etc. to ensure optimal operation of the first battery system 211 within the first energy storage sub-system 210.

In one embodiment, the battery management system within the second energy storage sub-system 220 is defined as a second battery management system 223. The second battery management system 223 is electrically connected to the first battery sub-cluster 221 and the second battery sub-cluster 222. The second battery management system 223 and the first battery management system 212 can communicate via Ethernet or Internet. The second battery management system 223 monitors key parameters such as the charge and discharge state, temperature, health state etc. of the first battery sub-cluster 221 or the second battery sub-cluster 222 in real time. The second battery management system 223 transmits the collected charge and discharge data of the first battery sub-cluster 221 or the second battery sub-cluster 222 to the first battery management system 212, enabling the first battery management system 212 to implement coordinated charge and discharge control of the first battery sub-cluster 221 or the second battery sub-cluster 222.

The first energy storage sub-system 210 can communicate with the power conversion system 120 via a controller area network (CAN) bus or the RS485 serial bus standard. CAN bus is a serial communication protocol bus designed for real-time applications that uses twisted-pair cables for signal transmission. It has the widest application range and supports distributed systems, enabling communication between a single power conversion system 120 and multiple battery management systems, enabling independent control of multiple energy storage sub-systems. RS485 is an electrical standard that can be defined by the user or by a general software protocol. Common standard protocols that use RS-485 as the physical layer include, but are not limited to, HART bus, Modbus protocol, Profibus DP protocol, etc.

In one embodiment, when the power conversion system 120 is connected to 'a' number of first energy storage sub-systems 210 and the remaining power of the power conversion system 120 is insufficient to support the capacity of a standard energy storage sub-system, the first battery management system 212 of the first energy storage sub-system 210 according to the present disclosure can be used to perform coordinated control of the battery sub-clusters of the second energy storage sub-system 220.

In one embodiment, the high-voltage busbar of the power conversion system 120 is electrically connected to the first battery system 211 within the first energy storage sub-system 210 and the first battery sub-cluster 221 or the second battery sub-cluster 222 within the second energy storage sub-system 220. The first battery system 211 and the first battery sub-cluster 221 or the second battery sub-cluster 222 are connected in parallel for use.

The first battery management system 212 performs coordinated charge and discharge control on the first battery sub-cluster 221 or the second battery sub-cluster 222 electrically connected to the power conversion system 120, which means that the second battery management system 223 sends battery information of the first battery sub-cluster 221 or the second battery sub-cluster 222 to the first battery management system 212; the first battery management system 212 analyzes and processes the battery information of the first battery system 211 and the second battery sub-cluster 222 to obtain the standby state and charge and discharge data of the first battery management system 212 and the second battery management system 223, so that the power conversion system 120 configures charge and discharge parameters based on the standby state and charge and discharge data of the first battery management system 212 and the second battery management system 223 to obtain the configured charge and discharge parameters; the first battery management system 212 then performs coordinated charge and discharge management on the first battery sub-cluster 221 or the second battery sub-cluster 222 electrically connected to the power conversion system 120 based on the configured charge and discharge parameters.

In the embodiment of the present disclosure, the energy storage system 100 includes a first energy storage sub-system 210, a second energy storage sub-system 220 and a power conversion system 120. The first energy storage sub-system 210 is provided with a first battery system 211 and a first battery management system 212, and the first battery management system 212 is electrically connected to the first battery system 211. The second energy storage sub-system 220 is provided with a second battery system and a second battery management system 223, the second battery system includes a first battery sub-cluster 221 and a second battery sub-cluster 222, the second battery management system 223 is electrically connected to the first battery sub-cluster 221 and the second battery sub-cluster 222, and the second battery management system 223 is communicatively connected to the first battery management system 212. The power conversion system 120 is electrically connected to the first battery system 211, and the first battery sub-cluster 221 or the second battery sub-cluster 222, and the power conversion system 120 is communicatively connected to the first battery management system 212. The first battery management system 212 performs coordinated charge and discharge control on the first battery sub-cluster 221. On one hand, by segmenting and controlling the second battery system within the second energy storage sub-system 220, the first battery management system 212 performs coordinated charge and discharge control on the battery sub-clusters within the second energy storage sub-system 220. This reduces the number of power conversion systems 120 without changing the existing control architecture of the energy storage sub-system, enabling the energy storage sub-system to meet the requirements of power conversion systems 120 with high power. This improves compatibility between the energy storage sub-system and the power conversion system 120, provides wider adaptability, and meets expansion needs. On the other hand, the use of a unified control system enables centralized management and maintenance of the entire energy storage system 100, simplifying maintenance work and improving the reliability and stability of the energy storage system.

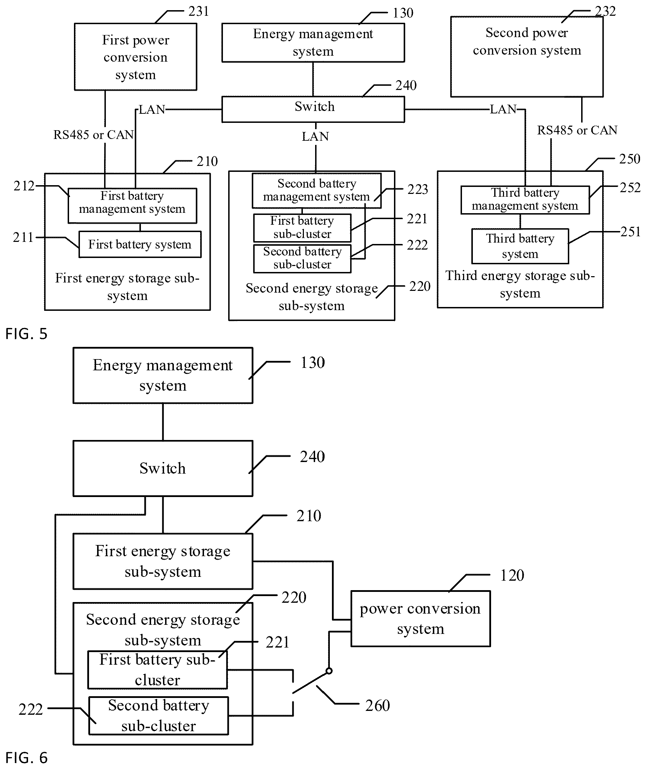

FIG. 4 shows a schematic structural diagram of another energy storage system 100 provided in an embodiment of the present disclosure. FIG. 5 shows a schematic diagram of the communication connections of another energy storage system 100 provided in an embodiment of the present disclosure. As shown in FIG. 4 and FIG. 5, in one embodiment, the power conversion system 120 includes a first power conversion system 231 and a second power conversion system 232. The first power conversion system 231 is electrically connected to the first battery system 211 and the first battery sub-cluster 221, and is communicatively connected to the first battery management system 212. The energy storage system further includes a third energy storage sub-system 250, which includes a third battery system 251 and a third battery management system 252. The second power conversion system 232 is electrically connected to the third battery system 251 and the second battery sub-cluster 222, and is communicatively connected to the third battery management system 252. The third battery management system 252 is communicatively connected to the second battery management system 223. The first battery management system 212 performs coordinated charge and discharge control on the first battery sub-cluster 221, and the third battery management system 252 performs coordinated charge and discharge control on the second battery sub-cluster 222.

The energy storage system 100 may include multiple power conversion systems 120, such as the first power conversion system 231 and the second power conversion system 232 in this embodiment. The high-voltage busbar of the first power conversion system 231 is electrically connected to the first battery system 211 and the first battery sub-cluster 221, while the high-voltage busbar of the second power conversion system 232 is electrically connected to the third battery system 251 and the second battery sub-cluster 222.

In one embodiment, the first battery management system 212 is communicatively connected to the first power conversion system 231 via a CAN bus or RS485 serial bus standard. The third battery management system 252 is communicatively connected to the second power conversion system 232 via a CAN bus or RS486 serial bus standard.

The first battery management system 212, the second battery management system 223, and the third battery management system 252 are communicatively connected via Ethernet. For example, the first battery management system 212, the second battery management system 223, and the third battery management system 252 are connected to the switch 240 via a local area network (LAN) to achieve communication.

The first battery management system 212 performs coordinated charge and discharge control on the first battery sub-cluster 221, and the third battery management system 252 performs coordinated charge and discharge control on the second battery sub-cluster 222. This means that the first battery management system 212 or the third battery management system 252 can control the charge and discharge of the battery system within its own energy storage sub-system, as well as control the charge and discharge of the batteries in the corresponding battery sub-cluster within the second energy storage sub-system 220.

In one embodiment, the first battery management system 212 is configured to send a first coordinated control request instruction to the second battery management system 223 when the first battery management system 212 is fault-free and in a standby state.

The second battery management system 223 is configured to receive the first coordinated control request instruction and send battery information of the first battery sub-cluster 221 to the first battery management system 212 when the second battery management system 223 is fault-free and in a standby state.

The first battery management system 212 is further configured to process the collected battery information of the first battery system 211 and the received battery information of the first battery sub-cluster 221 to obtain standby state and charge/discharge data of the first battery management system 212 and second battery management system 223, and send the standby state and charge/discharge data to the first power conversion system 231.

The first power conversion system 231 is configured to configure charge/discharge parameters based on the standby state and charge/discharge data of the first battery management systems 212 and second battery management system 223, and send the charge/discharge parameters to the first battery management system 212, so that the first battery management system 212 can perform coordinated charge and discharge control of the first battery sub-cluster 221 based on the charge/discharge parameters.

The standby state of the battery management system means a state in which the energy storage sub-system is in a low-power mode, with only essential hardware powered to conserve energy. In the standby state, the battery management system powers core components, maintaining only minimal system functionality.

The aforementioned first coordinated control request instruction indicates that the first battery management system 212 requests coordinated control to the second battery management system 223. Upon receiving the first coordinated control request instruction from the first battery management system 212, the second battery management system 223 can collect battery information of the first battery sub-cluster 221, including but not limited to the voltage, current, temperature, SOC, etc. of the first battery sub-cluster 221, and transmit the information of the first battery sub-cluster 221 to the first battery management system 212.

The first battery management system 212 can collect battery information of the first battery system 211 in real time, analyze and process the battery information of the first battery system 211 and the first battery sub-cluster 221, obtain the standby state and charge and discharge data of the first battery management system 212 and the second battery management system 223, and send them to the first power conversion system 231. The charge and discharge data may include, but is not limited to, charge and discharge current, charge and discharge power, and so on.

In one embodiment, the first power conversion system 231 determines whether the first battery management system 212 and the second battery management system 223 are in the standby state. If so, it determines whether the charge and discharge data meet preset charge and discharge conditions. If so, it configures charge and discharge parameters; if not, it waits.

The charge and discharge data meeting the preset charge and discharge conditions includes at least one of the following: charging power less than or equal to a preset charging power threshold; charging current less than or equal to a preset charging current threshold; discharging power greater than or equal to a preset discharging power threshold; or discharging current greater than or equal to a preset discharging current threshold.

The charge and discharge parameters may include, but are not limited to, charge and discharge current, charge and discharge power, and so on. When the preset charging and discharging conditions are met, the first power conversion system 231 configures the charging and discharging parameters and sends them to the first power conversion system 231. The first power conversion system 231 then comprehensively schedules and optimizes the operating state of the first battery system 211 and the first battery sub-cluster 221 based on the charging and discharging parameters, achieving coordinated charge and discharge control and ensuring coordinated operation between the two.

In one embodiment, the third battery management system 252 is configured to send a second coordinated control request instruction to the second battery management system 223 when the third battery management system 252 is fault-free and in a standby state.

The second battery management system 223 is configured to receive the second coordinated control request instruction and send battery information of the second battery sub-cluster 222 to the third battery management system 252 when the second battery management system 223 is fault-free and in a standby state.

The third battery management system 252 is further configured to process the collected battery information of the third battery system 251 and the received battery information of the second battery sub-cluster 222 to obtain standby states and charge/discharge data of the third battery management system 252 and the second battery management system 223, and send them to the second power conversion system 232.

The second power conversion system 232 is configured to configure charge and discharge parameters according to the standby states and charge and discharge data, obtain the charge and discharge parameters and send them to the third battery management system 252, so that the third battery management system 252 can perform coordinated charge and discharge control of the second battery sub-cluster 222 according to the charge and discharge parameters.

It should be noted that the specific implementation of the charge and discharge coordinated control on the second battery sub-cluster 222 by the third battery management system 252 is similar to the specific implementation of the charge and discharge coordinated control on the first battery sub-cluster 221 by the first battery management system 212, and will not be repeated here.

In the embodiments of the present disclosure, coordinated charge and discharge control is implemented for the first battery sub-cluster 221 via the first battery management system 212, and coordinated charge and discharge control is implemented for the second battery sub-cluster 222 via the third battery management system 252, effectively improving the effectiveness and reliability of the energy storage system 100.

FIG. 6 shows a schematic structural diagram of another energy storage system 100 provided in the embodiments of the present disclosure. As shown in FIG. 6, in one embodiment, the first and second battery sub-clusters 221, 222 are electrically connected to the power conversion system 120 via a switch element 260. The switch element 260 is configured to selectively connect the first and second battery sub-clusters 221, 222 to the power conversion system 120, enabling the first battery management system 212 to perform time-division coordinated charge and discharge control on the first and second battery sub-clusters 221, 222.

It should be noted that the switch element 260 may include a relay, a contactor, an isolating switch, etc., and the present disclosure is not limited thereto; any switch element capable of selectively connecting the first and second battery sub-clusters 221, 222 to the power conversion system 120 is sufficient.

In one embodiment, the first battery management system 212 is communicatively connected to the power conversion system 120 via a CAN bus or RS485 serial bus standard.

In one embodiment, the first battery management system 212 is configured to send a third coordinated control request instruction to the second battery management system 223 when the first battery management system 212 is fault-free and in a standby state.

The second battery management system 223 is configured to receive the third coordinated control request instruction, control the switch element 260 to electrically connect the target battery sub-cluster to the power conversion system 120, and send battery information of the target battery sub-cluster to the first battery management system 212 when the second battery management system 223 is fault-free and in a standby state. The target battery sub-cluster is the first battery sub-cluster 221 or the second battery sub-cluster 222.

The first battery management system 212 is further configured to process the collected battery information of the first battery system 211 and the received battery information of the target battery sub-cluster, obtain the standby state and charge and discharge data of the first battery management system 212 and the second battery management system 223, and send them to the power conversion system 120.

The power conversion system 120 is configured to configure charge and discharge parameters based on the standby state and charge and discharge data of the first battery management system 212 and the second battery management system 223, and send the charge and discharge parameters to the first battery management system 212, so that the first battery management system 212 can perform coordinated charge and discharge control of the target battery sub-cluster based on the charge and discharge parameters.

When the second battery management system 223 receives the coordinated control request instruction sent by the first battery management system 212, the second battery management system 223 can determine the target battery cluster 311 based on the battery state of the first battery sub-cluster 221 or the second battery sub-cluster 222. Or, the first battery sub-cluster 221 or the second battery sub-cluster 222 can be alternately electrically connected to the power conversion system 120 as the target battery cluster 311, causing the first battery management system 212 to perform time-division coordinated charge and discharge control on the first battery sub-cluster 221 or the second battery sub-cluster 222 electrically connected to the power conversion system 120.

It should be noted that the specific implementation method of the first battery management system 212 performing coordinated charge and discharge control on the target battery sub-cluster is similar to the specific implementation method of the first battery management system 212 performing coordinated charge and discharge control on the first battery sub-cluster 221 in the aforementioned embodiment, and the similarities are not repeated here.

In the embodiment of the present disclosure, the first battery sub-cluster 221 and the second battery sub-cluster 222 are selectively electrically connected to the power conversion system 120 via the switch element 260, thereby enabling the first battery management system 212 to perform time-division coordinated charge and discharge control on the first battery sub-cluster 221 or the second battery sub-cluster 222, and improving system scalability.

In one embodiment, the energy storage system further includes an energy management system 130, which is communicatively connected to the first battery management system 212, the second battery management system 223, and the third battery management system 252. When the energy storage system 100 includes multiple energy storage sub-systems, the battery management systems within the multiple energy storage sub-systems are communicatively connected to the energy management system 130 respectively.

The first battery management system 212 and the second battery management system 223 are also communicatively connected to the energy management system 130 via Ethernet. The first battery management system 212 and the second battery management system 223 are connected to the switch 240 via a local area network (LAN) and connected to the energy management system 130.

The energy management system 130 is responsible for the control strategy of the energy storage system 100. This control strategy influences the degradation rate and cycle life of the batteries within the system, thereby determining the economic efficiency of the energy storage. Furthermore, the energy management system 130 can further monitor operational faults within the energy storage system 100, ensuring timely equipment protection and safety.

Based on the operating parameters of the batteries or the real-time operating parameters of the auxiliary energy storage devices, the energy management system 130 generates a control strategy for the energy storage system 100, thereby controlling the operating state, etc. of the battery devices or the auxiliary energy storage devices.

The energy storage system 100 may further include multiple other auxiliary energy storage devices of which operating states require monitoring. These devices may include, but are not limited to, liquid cooling cabinets, fire protection equipment, air conditioners, and master control meters. The energy management system 130 can also collect the performance parameters of these auxiliary energy storage devices. Based on the operating states of the auxiliary energy storage devices and the energy-saving requirements of the system, the energy management system 130 controls and adjusts the various auxiliary energy storage devices and their parameters to achieve efficient energy utilization and conservation.

In the embodiments of the present disclosure, the coordinated battery management system centrally manages the thermal management of each energy storage sub-system through the energy management system 130, ensuring that each sub-system operates within an appropriate temperature range, avoiding local overheating and extending battery life. Through real-time temperature monitoring and intelligent temperature control strategies, the system automatically adjusts the cooling and heating devices of the energy storage sub-systems, optimizing temperature management and improving battery efficiency and lifespan. Furthermore, the battery management system features detailed diagnostic and alarm functions, enabling timely detection and resolution of potential issues, reducing the incidence of failures. The system also automatically generates maintenance reports and provides maintenance recommendations to assist operators in preventive maintenance.

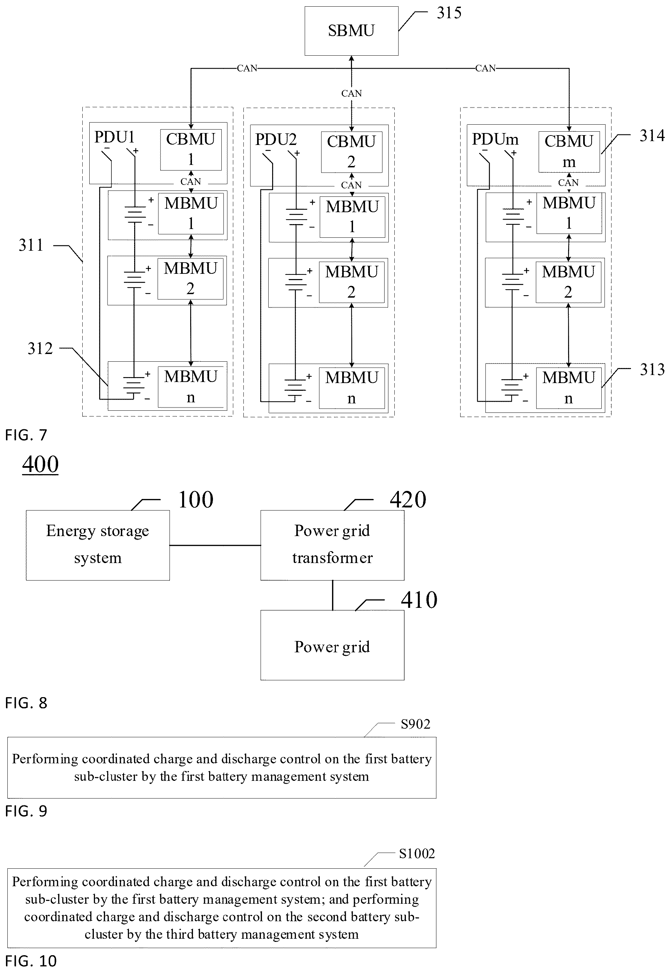

FIG. 7 illustrates a schematic diagram of a battery management system within an energy storage sub-system provided in the embodiments of the present disclosure. As shown in FIG. 7, each energy storage sub-system is equipped with 'm' number of battery clusters 311. Each battery cluster 311 includes 'n' number of battery modules 312 connected in series. Each battery module 312 can be composed of multiple battery cells connected in series and parallel, where m and n are integers greater than 1. For example, each energy storage sub-system has 10 battery clusters 311. Each battery cluster 311 includes 10 battery modules 312 connected in series. Each battery module 312 consists of 50 battery cells connected in series. This means that each energy storage sub-system has 100 battery modules 312 or 5,000 battery cells.

Each energy storage sub-system includes a system battery management unit (SBMU) 315, n cluster battery management units (CBMUs) 314, and m×n module battery management units (MBMUs) 313, all connected communicatively. The system battery management unit 315 is configured to manage a corresponding energy storage sub-system. The cluster battery management unit 314 is configured to manage a corresponding battery cluster 311. The module battery management unit 313 is configured to manage a corresponding battery module 312.

As shown in FIG. 7, one energy storage sub-system includes m battery clusters 311, one battery cluster 311 includes n battery modules 312, one battery cluster 311 corresponds to a cluster battery management unit CBMU 314, and each battery module 312 corresponds to a module battery management unit MBMU 313. Each module battery management unit 313 is configured to collect performance parameters of the corresponding battery module 312. For example, in FIG. 7, the energy storage sub-system includes m battery clusters 311 and corresponding m cluster battery management units 314, namely CBMU1 to CBMUm. Each battery cluster 311 includes n module battery management units 313, namely MBMU1 to MBMUn, where MBMU1 corresponds to the first battery module 312, MBMU2 corresponds to the second battery module 312, and MBMUn corresponds to the nth battery module 312. The battery modules 312 are connected in series to form the battery cluster 311. Accordingly, MBMU1, MBMU2, ..., MBMUn communicate serially in sequence. That is, MBMU1 collects the performance parameters of the first battery module 312 and sends the performance parameters of the first battery pack to MBMU2. MBMU2 collects the performance parameters of the second battery pack and sends the performance parameters of the first and second battery modules 312 to MBMU3. Finally, MBMUn collects the performance parameters of the nth battery module 312 and sends the performance parameters of the n battery modules 312 in the battery cluster 311 to the cluster battery management unit CBMU 314. Each cluster battery management unit (CBMU) 314 collects performance parameters of the n battery modules 312 within the corresponding battery cluster 311 and sends these performance parameters to the SBMU. The SBMU sends the performance parameters of the n×m battery modules 312 within the energy storage sub-system to the CBMU.

The module battery management unit 313 can implement at least one of charge balancing at cell-level within the battery module 312 and SOX, SOH, and SOE at the battery module 312 level. In some embodiments, the module battery management unit 313 can be referred to as a slave BMS, a primary BMS, or a battery management module (BMM).

The cluster battery management unit 314 can implement at least one of charge balancing at the battery module 312 level within the battery cluster 311 and SOX, SOH, and SOE at the battery cluster 311 level. In some embodiments, the cluster battery management unit 314 can also be referred to as a master BMS, a secondary BMS, a cluster controller, or a battery control module, etc.

The system battery management unit 315 can implement at least one of charge balancing at the battery cluster 311 level within the energy storage sub-system and SOX, SOH, and SOE at the energy storage sub-system level. In some embodiments, the system battery management unit 315 can be referred to as a display controller, a three-level BMS, a stack controller, or an energy storage management unit, etc.

The performance parameters of the battery module 312 may include, but are not limited to, voltage, current, temperature, state of charge (SOC), state of health (SOH), etc. of the battery module 312.

In this embodiment of the present application, the system battery management unit 315, the cluster battery management unit 314, the module battery management unit 313, etc. can be an application-specific integrated circuit (ASIC), a programmable logic device (PLD), a digital signal processor (DSP), or a combination thereof. The PLD described above can be a complex programmable logic device (CPLD), a field-programmable gate array (FPGA), a generic array logic (GAL), or any combination thereof, and is not specifically limited in this embodiment of the present application.

Based on this, the embodiments of the present disclosure also provide a control method for a power consumption system 400 and an energy storage system 100, as described in the following embodiments. Since the principles of this system embodiment are similar to those of the energy storage system 100 embodiment, the implementation of the power consumption system 400 embodiment can be referenced to the implementation of the energy storage system 100 embodiment, and any repetitions will not be repeated.

FIG. 8 shows a schematic diagram of a structure of a power consumption system 400 provided in an embodiment of the present disclosure. As shown in FIG. 8, the embodiment of the present disclosure also provides a power consumption system 400, which includes the energy storage system 100 described in the above embodiment, electrically connected to a power grid 410.

The power conversion system 120 can be connected to the power grid 410 via a grid transformer 420. The power conversion system 120 primarily consists of an inverter, a transformer, a controller, etc. The power conversion system 120 converts battery-stored electrical energy into alternating current (AC) and supplies it to the power grid 410 or user-side electrical devices. The primary functions of the power conversion system 120 include converting DC power into AC power, controlling the input and output of electrical energy, and ensuring the safety and stability of the energy storage system 100. The performance of the power conversion system 120 directly impacts the operating efficiency and service life of the energy storage system 100.

The embodiments of the present disclosure also provide a control method for the energy storage system 100, as described in the following embodiments. Because the principle of problem solving in this method embodiment is similar to that in the aforementioned energy storage system 100 embodiment, the implementation of this method embodiment can be referenced to the aforementioned implementation of the energy storage system 100 embodiment, and any repetitive details will not be repeated.

FIG. 9 shows a flow chart of a control method for an energy storage system 100 provided in an embodiment of the present disclosure. As shown in FIG. 9, in one embodiment, the control method for the energy storage system 100 of the present disclosure, utilizing the energy storage system 100 of the aforementioned embodiment, primarily includes the following steps:
S902: performing coordinated charge and discharge control on the first battery sub-cluster 221 by the first battery management system 212.

The first battery management system 212 can perform coordinated charge and discharge control on the first battery sub-cluster 221 or the second battery sub-cluster 222 electrically connected to the power conversion system 120. The second battery management system 223 sends battery information of the first battery sub-cluster 221 or the second battery sub-cluster 222 to the first battery management system 212. The first battery management system 212 analyzes and processes the battery information of the first battery system 211 and the battery information of the first battery sub-cluster 221 or the second battery sub-cluster 222 to obtain the standby state and charge and discharge data of the first battery management system 212 and the second battery management system 223. The power conversion system 120 configures charge and discharge parameters based on the standby state and charge and discharge data of the first battery management system 212 and the second battery management system 223 to obtain the configured charge and discharge parameters. The first battery management system 212 then performs coordinated charge and discharge management on the first battery sub-cluster 221 or the second battery sub-cluster 222 electrically connected to the power conversion system 120 based on the charge and discharge parameters.

In the embodiment of the present disclosure, the first battery management system 212 performs coordinated charge and discharge control over the first battery sub-cluster 221. On one hand, by segmenting and controlling the second battery system within the second energy storage sub-system 220, the first battery management system 212 performs coordinated charge and discharge control on the battery sub-clusters within the second energy storage sub-system 220. This reduces the number of power conversion systems 120 without changing the existing control architecture of the energy storage sub-system, enabling the energy storage sub-system to meet the requirements of power conversion systems 120 with high-power. This improves compatibility between the energy storage sub-system and the power conversion system 120, provides wider adaptability, and meets expansion requirements. On the other hand, the use of a unified control system enables centralized management and maintenance of the entire energy storage system 100, simplifying maintenance work and improving the reliability and stability of the energy storage system.

As shown in FIG. 10, in one embodiment, the power conversion system 120 includes a first power conversion system 231 and a second power conversion system 232. The first power conversion system 231 is electrically connected to the first battery system 211 and the first battery sub-cluster 221, and the first power conversion system 231 is communicatively connected to the first battery management system 212. The energy storage system further includes a third energy storage sub-system 250, which includes a third battery system 251 and a third battery management system 252. The second power conversion system 232 is electrically connected to the third battery system 251 and the second battery sub-cluster 222, and is communicatively connected to the third battery management system 252. The third battery management system 252 is communicatively connected to the second battery management system 223. The control method of the energy storage system 100 according to the present disclosure further includes:
S1002, performing coordinated charge and discharge control on the first battery sub-cluster 221 by the first battery management system 212; and performing coordinated charge and discharge control on the second battery sub-cluster 222 by the third battery management system 252.

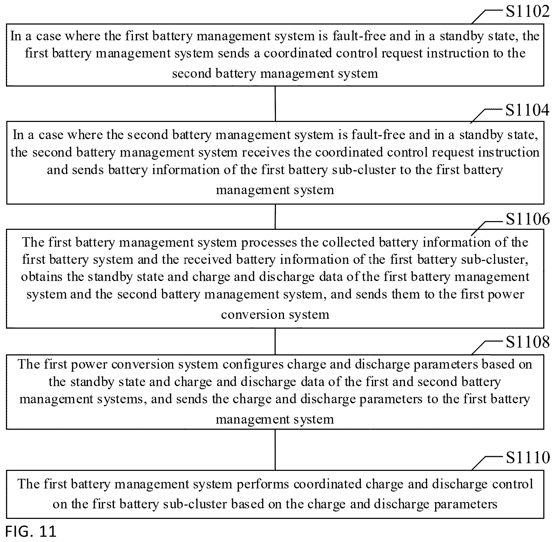

As shown in FIG. 11, in one embodiment, performing the coordinated charge and discharge control on the first battery sub-cluster 221 by the first battery management system 212 includes:
S1102, in a case where the first battery management system 212 is fault-free and in a standby state, the first battery management system 212 sends a first coordinated control request instruction to the second battery management system 223;
S1104, in a case where the second battery management system 223 is fault-free and in a standby state, the second battery management system 223 receives the first coordinated control request instruction and sends battery information of the first battery sub-cluster 221 to the first battery management system 212;
S1106, the first battery management system 212 processes the collected battery information of the first battery system 211 and the received battery information of the first battery sub-cluster 221, obtains the standby state and charge and discharge data of the first battery management system 212 and the second battery management system 223, and sends them to the first power conversion system 231.
S1108, the first power conversion system 231 configures charge and discharge parameters based on the standby state and charge and discharge data of the first and second battery management systems 212 and 223, and sends the charge and discharge parameters to the first battery management system 212.
S1110, the first battery management system 212 performs coordinated charge and discharge control on the first battery sub-cluster 221 based on the charge and discharge parameters.

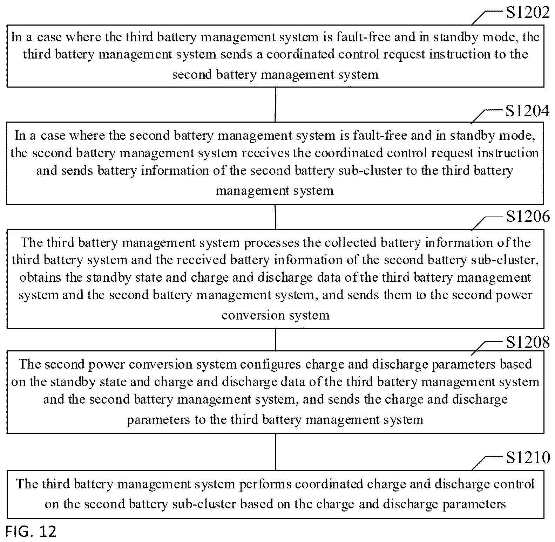

As shown in FIG. 12, in one embodiment, performing the coordinated charge and discharge control on the third battery system 251 and the second battery sub-cluster 222 by the third battery management system 252 includes:
S1202, in a case where the third battery management system 252 is fault-free and in standby mode, the third battery management system 252 sends a second coordinated control request instruction to the second battery management system 223;
S1204, in a case where the second battery management system 223 is fault-free and in standby mode, the second battery management system 223 receives the second coordinated control request instruction and sends battery information of the second battery sub-cluster 222 to the third battery management system 252;
S1206, the third battery management system 252 processes the collected battery information of the third battery system 251 and the received battery information of the second battery sub-cluster 222, obtains the standby state and charge and discharge data of the third battery management system 252 and the second battery management system 223, and sends them to the second power conversion system 232;
S1208, the second power conversion system 232 configures charge and discharge parameters based on the standby state and charge and discharge data of the third battery management system 252 and the second battery management system 223, and sends the charge and discharge parameters to the third battery management system 252;
S1210, the third battery management system 252 performs coordinated charge and discharge control on the second battery sub-cluster 222 based on the charge and discharge parameters.

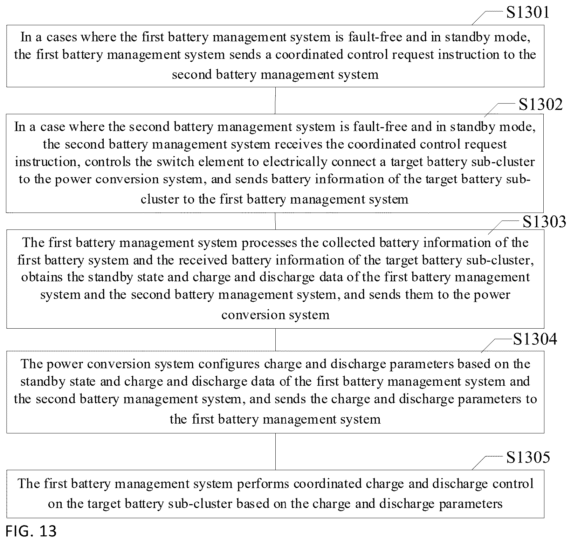

As shown in FIG. 13, in one embodiment, performing the coordinated charge and discharge control on the first battery sub-cluster 221 by the first battery management system 212 includes:
S1301, in a cases where the first battery management system 212 is fault-free and in standby mode, the first battery management system 212 sends a third coordinated control request instruction to the second battery management system 223;
S1302, in a case where the second battery management system 223 is fault-free and in standby mode, the second battery management system 223 receives the third coordinated control request instruction, controls the switch element 260 to electrically connect a target battery sub-cluster to the power conversion system 120, and sends battery information of the target battery sub-cluster to the first battery management system 212. The target battery sub-cluster is the first battery sub-cluster 221 or the second battery sub-cluster 222;
S1303, the first battery management system 212 processes the collected battery information of the first battery system 211 and the received battery information of the target battery sub-cluster, obtains the standby state and charge and discharge data of the first battery management system 212 and the second battery management system 223, and sends them to the power conversion system 120;
S1304, the power conversion system 120 configures charge and discharge parameters based on the standby state and charge and discharge data of the first battery management system 212 and the second battery management system 223, and sends the charge and discharge parameters to the first battery management system 212;
S1305, the first battery management system 212 performs coordinated charge and discharge control on the target battery sub-cluster based on the charge and discharge parameters.

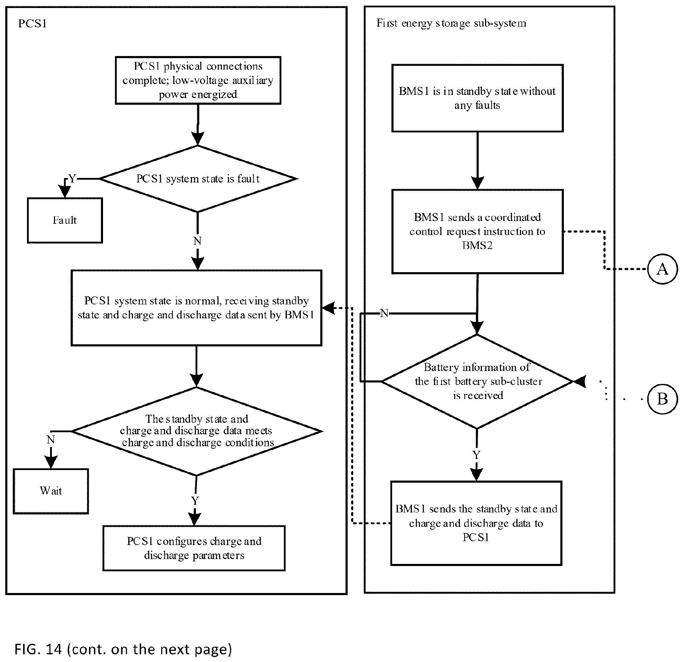

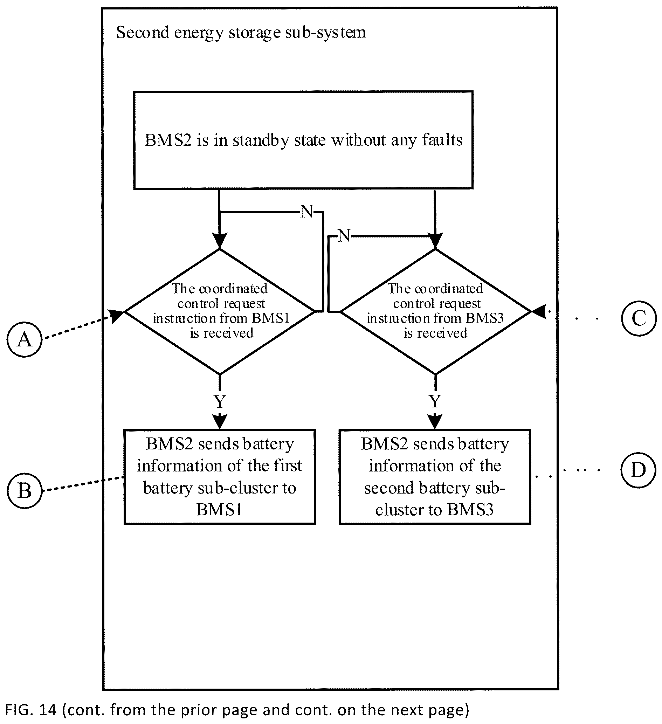

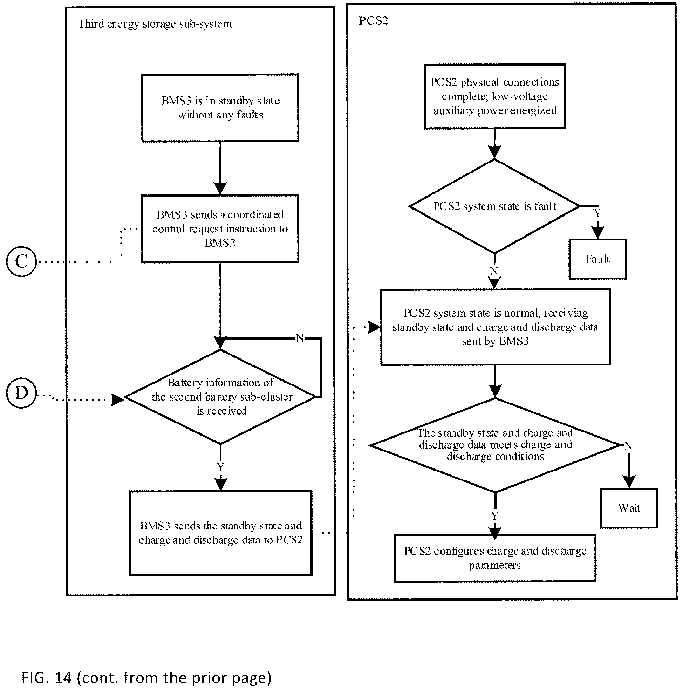

To deepen understanding of the control method of the configurable energy storage system according to the present disclosure, a detailed description is provided below with reference to FIG. 14. In this example, the energy storage system 100 includes a first power conversion system PCS1, a second power conversion system PCS2, a first energy storage sub-system, a second energy storage sub-system and a third energy storage sub-system. The first energy storage sub-system includes a first battery system and a first battery management system BMS1 which are electrically connected. The second energy storage sub-system includes a second battery system (the second battery system includes a first battery sub-cluster and a second battery sub-cluster) and a second battery management system BMS2 which are electrically connected. The first battery sub-cluster, the second battery sub-cluster and the second battery management system BMS2 are electrically connected. The third energy storage sub-system includes a third battery system and a third battery management system BMS3 which are electrically connected. The first battery management system BMS1 is communicatively connected to PCS1, the third battery management system BMS3 is communicatively connected to PCS2, and BMS1, BMS2 and BMS3 are communicatively connected via Ethernet.

As shown in FIG. 14, in one embodiment, the control method of the energy storage system 100 according to the present disclosure primarily includes the following aspects:
BMS1 in the first energy storage sub-system 210 independently controls the first battery system 211. BMS1 is responsible for independently controlling the first battery system 211, monitoring and managing key parameters such as the charge and discharge state, temperature, health state, etc. of the batteries in the first energy storage sub-system 210 in real time, ensuring that the first battery system 211 of the first energy storage sub-system 210 operates in optimal conditions.

BMS3 in the third energy storage sub-system 250 independently controls the third battery system 251. BMS3 is responsible for independently controlling the third battery system 251, monitoring and managing key parameters such as the charge/discharge state, temperature, health state, etc. of the batteries in the third energy storage sub-system 250 in real time, ensuring that the third battery system 251 of the third energy storage sub-system 250 operates in optimal conditions.

BMS2 of the second energy storage sub-system 220 and BMS1 of the first energy storage sub-system 210 perform coordinated charge and discharge control, specifically including the following operations:
BMS2 of the second energy storage sub-system 220 is responsible for monitoring the battery information of the first battery sub-cluster 221 and the second battery sub-cluster 222 within the second energy storage sub-system 220;
BMS1 of the first energy storage sub-system 210 is responsible for monitoring the battery information of the first battery system 211 within the first energy storage sub-system 210;
   in a case where BMS1 of the first energy storage sub-system 210 is fault-free and in standby mode, BMS1 sends a coordinated control request instruction to BMS2.
   if BMS2 receives the coordinated control request instruction from BMS1, then BMS2 sends BMS1 the battery information of the first battery sub-cluster 221, including but not limited to voltage, current, temperature, SOC, etc. If BMS2 does not receive the coordinated control request instruction from BMS1, then BMS2 performs polling;
   after BMS2 receives the battery information of the first battery sub-cluster 221, BMS1 analyzes the battery information of the first battery sub-cluster 221 and the first battery system 211, obtains the operating state and charge/discharge data of BMS1 and BMS2, and sends the standby state and charge/discharge data of BMS1 and BMS2 to PCS1;
   PCS1 determines whether the standby state and charge/discharge data of BMS1 and BMS2 meet the preset charge/discharge conditions. If not, PCS1 waits for the standby state and charge/discharge data of BMS1 and BMS2 to meet the preset charge/discharge conditions. If so, PCS1 configures the charge/discharge parameters and sends them to BMS1;
   based on the configured charge/discharge parameters, BMS1 comprehensively schedules and optimizes the operating state of the first battery system 211 and the first battery sub-cluster 221, ensuring coordinated operation of the first battery system 211 and the first battery sub-cluster 221.

The coordinated charge and discharge control of BMS3 of the third energy storage sub-system 250 and BMS2 of the second energy storage sub-system 220 operates as follows:
BMS2 of the second energy storage sub-system 220 is responsible for monitoring the battery information of the first battery sub-cluster 221 and the second battery sub-cluster 222 within the second energy storage sub-system 220.
BMS3 of the third energy storage sub-system 250 is responsible for monitoring the battery information of the third battery system 251 within the third energy storage sub-system 250.

In a case where BMS3 of the third energy storage sub-system 250 is fault-free and in standby mode, BMS3 sends a coordinated control request instruction to BMS2.

If BMS2 receives the coordinated control request instruction sent by BMS3, BMS2 sends BMS3 battery information of the second battery sub-cluster 222, including but not limited to voltage, current, temperature, SOC, etc. If BMS2 does not receive the coordinated control request instruction sent by BMS3, then BMS3 performs polling.

After receiving battery information of the second battery sub-cluster 222, BMS3 analyzes the battery information of the second battery sub-cluster 222 and the third battery system 251, obtains the standby state and charge/discharge data of BMS3 and BMS2, and sends the standby state and charge/discharge data of BMS3 and BMS2 to PCS1.

PCS2 determines whether the standby state and charge/discharge data of BMS3 and BMS2 meet preset charge/discharge conditions. If not, PCS3 waits for the operating state and charge/discharge data of BMS3 to meet the preset charge/discharge conditions. If so, PCS3 configures charge/discharge parameters and sends the configured charge/discharge parameters to BMS3.

Based on the configured charge/discharge parameters, BMS3 comprehensively schedules and optimizes the operating state of the third battery system 251 and the second battery sub-cluster 222, ensuring coordinated operation of the third battery system 251 and the second battery sub-cluster 222.

It should be noted that while the detailed description above mentions several modules or units of the device for executing actions, this division is not mandatory. In practice, according to the embodiments of the present disclosure, the features and functions of two or more modules or units described above can be embodied in a single module or unit. Conversely, the features and functions of a single module or unit described above can be further divided and embodied by multiple modules or units.

Also, although the steps of the methods of the present disclosure are described in a specific order in the figures, this does not require or imply that the steps must be performed in that specific order, or that all steps must be performed to achieve the desired results. Additionally or alternatively, certain steps may be omitted, multiple steps may be combined into a single step, and/or a single step may be broken down into multiple steps.

From the above description of the embodiments, those skilled in the art will readily understand that the example embodiments described herein can be implemented via software or via software combined with necessary hardware. Therefore, the technical solutions according to the embodiments of the present disclosure can be embodied in the form of a software product, which can be stored on a non-volatile storage medium (such as a CD-ROM, USB flash drive, or removable hard drive) or on a network and includes instructions for enabling a computing device (such as a personal computer, server, mobile terminal, or network device) to execute the methods according to the embodiments of the present disclosure.

Those skilled in the art will readily get other embodiments of the present disclosure after considering the specification and practicing the present disclosure. This application is intended to cover any variations, uses, or adaptations of the present disclosure that follow the general principles of the present disclosure and include common knowledge or customary techniques in the art not disclosed herein. The description and examples are to be considered as exemplary only, with the true scope and spirit of the present disclosure being indicated by the appended claims.

## Claims

1. An energy storage system, comprising:
a first energy storage sub-system (210), comprising a first battery system (211) and a first battery management system (212), the first battery management system (212) being electrically connected to the first battery system;
a second energy storage sub-system (220), comprising a second battery system and a second battery management system (223), the second battery system comprising a first battery sub-cluster (221) and a second battery sub-cluster (222), the second battery management system (223) being electrically connected to the first battery sub-cluster (221) and the second battery sub-cluster (222), and the second battery management system (223) being communicatively connected to the first battery management system (212); and
a power conversion system (120), electrically connected to the first battery system (211) and the first battery sub-cluster (221) or the second battery sub-cluster (222), and communicatively connected to the first battery management system (212);
wherein the first battery management system (212) performs coordinated charge and discharge control on the first battery sub-cluster (221).

2. The energy storage system according to claim 1, wherein the power conversion system (120) comprises a first power conversion system (231) and a second power conversion system (232); wherein the first power conversion system (231) is electrically connected to the first battery system (211) and the first battery sub-cluster (221), and the first power conversion system (231) is communicatively connected to the first battery management system (212);
the energy storage system further comprises a third energy storage sub-system (250), the third energy storage sub-system (250) comprises a third battery system (251) and a third battery management system (252); the second power conversion system (232) is electrically connected to the third battery system (251) and the second battery sub-cluster (222), and the third battery management system (252) is communicatively connected to the second battery management system (223);
wherein the first battery management system (212) performs coordinated charge and discharge control on the first battery sub-cluster (221);
the third battery management system (252) performs coordinated charge and discharge control on the second battery sub-cluster (222).

3. The energy storage system according to claim 2, wherein the first battery management system (212) is configured to send a first coordinated control request instruction to the second battery management system (223) in a case where the first battery management system (212) is fault-free and in a standby state;
the second battery management system (223) is configured to receive the first coordinated control request instruction and send battery information of the first battery sub-cluster (221) to the first battery management system (212) in a case where the second battery management system (223) is fault-free and in a standby state;
the first battery management system (212) is further configured to process collected battery information of the first battery system (211) and received battery information of the first battery sub-cluster (221), obtain standby state and charge and discharge data of the first and second battery management systems (212, 223), and send the standby state and charge and discharge data of the first and second battery management systems (212, 223) to the first power conversion system (231);
the first power conversion system (231) is configured to configure charge and discharge parameters based on the standby state and charge and discharge data of the first and second battery management systems (212, 223), and send the charge and discharge parameters to the first battery management system (212), and the first battery management system (212) performs coordinated charge and discharge control on the first battery sub-cluster (221) according to the charge and discharge parameters.

4. The energy storage system according to claim 2, wherein the third battery management system (252) is configured to send a second coordinated control request instruction to the second battery management system (223) in a case where the third battery management system (252) is fault-free and in a standby state;
the second battery management system (223) is configured to receive the second coordinated control request instruction and send battery information of the second battery sub-cluster (222) to the third battery management system (252) in a case where the second battery management system (223) is fault-free and in a standby state;
the third battery management system (252) is further configured to process collected battery information of the third battery system (251) and received battery information of the second battery sub-cluster (222), obtain standby state and charge and discharge data of the third battery management system (252) and the second battery management system (223), and send the standby state and charge and discharge data of the third battery management system (252) and the second battery management system (223) to the second power conversion system (232);
the second power conversion system (232) is configured to configure charge and discharge parameters based on the standby state and charge and discharge data of the third battery management system (252) and the second battery management system (223), and send the charge and discharge parameters to the third battery management system (252), and the third battery management system (252) performs coordinated charge and discharge control on the second battery sub-cluster (222) based on the charge and discharge parameters.

5. The energy storage system according to claim 1, wherein the first battery sub-cluster (221) and the second battery sub-cluster (222) are electrically connected to the power conversion system (120) via a switch element (240), wherein the switch element (240) is configured to selectively electrically connect the first battery sub-cluster (221) and the second battery sub-cluster (222) to the power conversion system (120), and the first battery management system (212) performs time-division coordinated charge and discharge control on the first battery sub-cluster (221) and the second battery sub-cluster (222).

6. The energy storage system according to claim 5, wherein the first battery management system (212) is configured to send a third coordinated control request instruction to the second battery management system (223) in a case where the first battery management system (212) is fault-free and in a standby state;
the second battery management system (223) is configured to, in a case where the second battery management system (223) is fault-free and in a standby state, receive the third coordinated control request instruction, control the switch element (240) to electrically connect a target battery sub-cluster to the power conversion system (120), and send battery information of the target battery sub-cluster to the first battery management system (212), wherein the target battery sub-cluster is the first battery sub-cluster (221) or the second battery sub-cluster (222);
the first battery management system (212) is further configured to process collected battery information of the first battery system (211) and received battery information of the target battery sub-cluster, obtain standby state and charge and discharge data of the first and second battery management systems (212, 223), and send the standby state and charge and discharge data of the first and second battery management systems (212, 223) to the power conversion system (120);
the power conversion system (120) is configured to configure charge and discharge parameters based on the standby state and charge and discharge data of the first and second battery management systems (212, 223), and send the charge and discharge parameters to the first battery management system (212), and the first battery management system (212) performs coordinated charge and discharge control on the target battery sub-cluster based on the charge and discharge parameters.

7. The energy storage system according to any one of claims 2 to 4, further comprising an energy management system (130), wherein the energy management system (130) is communicatively connected to the first battery management system (212), the second battery management system (223), and the third battery management system (252).

8. A method for controlling an energy storage system, utilizing an energy storage system according to any one of claims 1 to 7, comprising:
(S902) performing coordinated charge and discharge control on the first battery sub-cluster (221) by the first battery management system (212).

9. The method for controlling the energy storage system according to claim 8, wherein the power conversion system (120) comprises a first power conversion system (231) and a second power conversion system (232); wherein the first power conversion system (231) is electrically connected to the first battery system (211) and the first battery sub-cluster (221), and the first power conversion system (231) is communicatively connected to the first battery management system (212);
the energy storage system further comprises a third energy storage sub-system (250), the third energy storage sub-system (250) comprises a third battery system (251) and a third battery management system (252); the second power conversion system (232) is electrically connected to the third battery system (251) and the second battery sub-cluster (222), and the third battery management system (252) is communicatively connected to the second battery management system (223);
wherein the method further comprises:
(S1002) performing coordinated charge and discharge control on the second battery sub-cluster (222) by the third battery management system (252).

10. The method for controlling the energy storage system according to claim 9, wherein performing the coordinated charge and discharge control on the first battery sub-cluster (221) by the first battery management system (212) comprises:
(S1102) in a case where the first battery management system (212) is fault-free and in a standby state, the first battery management system (212) sending a first coordinated control request instruction to the second battery management system (223);
(S1104) in a case where the second battery management system (223) is fault-free and in a standby state, the second battery management system (223) receiving the first coordinated control request instruction and sending battery information of the first battery sub-cluster (221) to the first battery management system (212);
(S1106) the first battery management system (212) processing collected battery information of the first battery system (211) and received battery information of the first battery sub-cluster (221), obtaining standby state and charge and discharge data of the first and second battery management systems (212, 223), and sending the standby state and charge and discharge data of the first and second battery management systems (212, 223) to the first power conversion system (231);
(S1108) the first power conversion system (231) configuring charge and discharge parameters based on the standby state and charge and discharge data of the first and second battery management systems (212, 223), and sending the charge and discharge parameters to the first battery management system (212); and
(S1110) the first battery management system (212) performing the coordinated charge and discharge control on the first battery sub-cluster (221) based on the charge and discharge parameters.

11. The method for controlling the energy storage system according to claim 9, wherein the (S902) performing the coordinated charge and discharge control on the second battery sub-cluster (222) by the third battery management system (252) comprises:
(S1202) in a case where the third battery management system (252) is fault-free and in a standby state, the third battery management system (252) sending a second coordinated control request instruction to the second battery management system (223);
(S1204) in a case where the second battery management system (223) is fault-free and in a standby state, the second battery management system (223) receiving the second coordinated control request instruction and sending battery information of the second battery sub-cluster (222) to the third battery management system (252);
(S1206) the third battery management system (252) processing collected battery information of the third battery system (251) and received battery information of the second battery sub-cluster (222), obtaining standby state and charge and discharge data of the third battery management system (252) and the second battery management system (223), and sending the standby state and charge and discharge data of the third battery management system (252) and the second battery management system (223) to the second power conversion system (232);
(S1208) the second power conversion system (232) configuring charge and discharge parameters based on the standby state and charge and discharge data of the third battery management system (252) and the second battery management system (223), and sending the charge and discharge parameters to the third battery management system (252); and
(S1210) the third battery management system (252) performing the coordinated charge and discharge control on the second battery sub-cluster (222) based on the charge and discharge parameters.

12. The method for controlling the energy storage system according to claim 8, wherein the first battery sub-cluster (221) and the second battery sub-cluster (222) are electrically connected to the power conversion system (120) via a switch element (240), wherein the switch element (240) is configured to selectively electrically connect the first battery sub-cluster (221) and the second battery sub-cluster (222) to the power conversion system (120), and the first battery management system (212) performs time-division coordinated charge and discharge control on the first battery sub-cluster (221) and the second battery sub-cluster (222);
wherein the (S902) performing the coordinated charge and discharge control on the first battery sub-cluster (221) by the first battery management system (212) comprises:
(S1301) in a case where the first battery management system (212) is fault-free and in a standby state, the first battery management system (212) sending a third coordinated control request instruction to the second battery management system (223);
(S1302) in a case where the second battery management system (223) is fault-free and in a standby state, the second battery management system (223) receiving the third coordinated control request instruction, controlling the switch element (240) to electrically connect a target battery sub-cluster to the power conversion system (120), and sending battery information of the target battery sub-cluster to the first battery management system (212), wherein the target battery sub-cluster is the first battery sub-cluster (221) or the second battery sub-cluster (222);
(S1303) the first battery management system (212) processing collected battery information of the first battery system (211) and received battery information of the target battery sub-cluster, obtaining standby state and charge and discharge data of the first and second battery management systems (212, 223), and sending the standby state and charge and discharge data of the first and second battery management systems (212, 223) to the power conversion system (120);
(S1304) the power conversion system (120) configuring charge and discharge parameters based on the standby state and charge and discharge data of the first and second battery management systems (212, 223), and sending the charge and discharge parameters to the first battery management system (212); and
(S1305) the first battery management system (212) performing the coordinated charge and discharge control on the target battery sub-cluster based on the charge and discharge parameters.

13. A power consumption system, comprising: an energy storage system according to any one of claims 1 to 7, electrically connected to a power grid.
